# EUROPÄISCHE PATENTSCHRIFT

(11) **EP 3 283 342 B1**
(45) Veröffentlichungstag und Bekanntmachung des Hinweises auf die Patenterteilung: **05.01.2022**
(21) Anmeldenummer: 16716865.7
(22) Anmeldetag: 15.04.2016
(51) Int. Cl.: B60T 17/18, B60T 17/22, F16D 66/00

(54) **VERFAHREN ZUM ERHÖHEN DER BETRIEBSSICHERHEIT THERMISCH BELASTETER FUNKTIONSTEILE EINER BREMSE EINES FAHRZEUGS**
METHOD FOR IMPROVING RELAIBILITY OF THERMALLY LOADED PARTS OF A VEHICLE BRAKE
PROCÉDÉ POUR AMÉLIORER LE SECURITÉ DE L'USURE DES PIÈCES SOLLICITÉES THERMIQUEMENT DANS UN FREIN D'UN VÉHICULE

(30) Priorität: 17.04.2015 DE 102015105862
(43) Veröffentlichungstag der Anmeldung: 21.02.2018
(73) Patentinhaber: KNORR-BREMSE Systeme für Nutzfahrzeuge GmbH, 80809 München (DE)
(72) Erfinder: HECKER, Falk, 71706 Markgröningen (DE); KOCH, Werner, 73326 Deggingen (DE); MAYR, Mathias, 82110 Germering (DE); THEIL, Robert, 82299 Türkenfeld (DE); WERTH, Alexander, 80999 München (DE)
(86) Internationale Anmeldenummer: PCT/EP2016/058336
(87) Internationale Veröffentlichungsnummer: WO 2016/166278

(56) Entgegenhaltungen:
- EP-A1- 2 149 721
- WO-A1-2012/045953
- CN-Y- 2 475 637
- DE-A1- 4 431 045
- DE-A1- 10 243 127
- US-A1- 2002 104 717
- US-A1- 2011 054 758

## Beschreibung

Die Erfindung betrifft ein Verfahren zum Erhöhen der Betriebssicherheit thermisch belasteter Funktionsteile einer Bremse eines Fahrzeugs nach dem Oberbegriff des Anspruchs 1. Die Erfindung bezieht sich auch auf ein entsprechendes Steuergerät.

Betriebsbedingt unterliegt eine Reihe, insbesondere sicherheitsrelevanter, Funktionsteile von Bremsen einer thermischen Belastung, die sich aus der reibenden Anlage von Bremsbelägen an einer Bremsscheibe ergeben. Dies kann u.a. auch aus den üblicherweise im Fahrbetrieb auftretenden Temperaturwechseln entstehen.

Diese thermischen Belastungen können zu mechanischen und/oder chemischen Veränderungen der Materialien der Funktionsteile führen, wobei beispielsweise ein sogenanntes Verglasen der Reibbeläge von Bremsbelägen zu einem Reibwertverlust an deren Reibfläche führen.

Eine thermische Überlastung der beteiligten Funktionsteile kann sich auch aus einem sogenannten Heißlaufen ergeben, Dabei findet kein bewusstes Bremsen statt, sondern das Heißlaufen erfolgt durch ein leichtes Anlegen der Bremsbeläge, was dauerhaft zu thermischen Schädigungen der Bremsbeläge und der mechanischen Teile der Scheibenbremse, wie Führungen, Dichtungen oder dergleichen führen kann.

Als kritisch im Sinne einer thermischen Überlastung ist auch eine dauerhafte Benutzung der Bremse bei Bergabfahrten zu sehen, die ebenso zu einer Schädigung der beteiligten Bauteile führen kann wie ein leichter Festsitz der Betätigungsorgane, beispielsweise einer Zuspanneinrichtung, wodurch ein unerwünschtes Restschleifmoment erzeugt wird, mit der Folge einer zu hohen Dauertemperatur.

Zur Ermittlung der Temperatur im Bereich der Scheibenbremse wird beispielsweise in der DE 102 43 127 A1 vorgeschlagen, einen induktiven Signalgeber als Multifunktionselement einzusetzen, mit dem u.a. temperaturabhängige Signale erzeugt werden, die in einer Auswerteeinrichtung mit einem Sollwert verglichen werden, bei dessen Überschreiten ein beispielsweise akustisches Signal gegeben wird.

Das Dokument DE 44 31 045 C2 beschreibt eine Sensoranordnung zur gemeinsamen Messung zweier Größen, z.B. die Drehzahl eines eine Bremse aufweisenden Rades eines Kraftfahrzeuges und der Temperatur der Bremse mittels eines induktiven Sensors.

In dem Dokument US 2011/054758 A1 wird ein Verfahren zum Warten einer Bremsscheibe beschrieben. Ein Scheibenbremsensystem eines Fahrzeugs bestimmt die aktuelle Temperatur einer Bremsscheibe. Das Scheibenbremssystem vergleicht die aktuelle Temperatur der Bremsscheibe mit einer kritischen Temperatur der Bremsscheibe. Die kritische Temperatur der Bremsscheibe ist eine Temperatur, oberhalb welcher eine Schädigung und/oder ein Verzug der Bremsscheibe auftreten kann. Das Scheibenbremssystem führt eine korrigierende Maßnahme zur Schadensverhütung der Bremsscheibe durch, wenn die aktuelle Temperatur der Bremsscheibe größer als die kritische Temperatur der Bremsscheibe ist. Die korrigierende Maßnahme kann folgendes umfassen, ist aber nicht darauf beschränkt: Anzeigen einer Warnung, Anpassen eines Traktionsüberwachungssystems des Fahrzeugs, Planen einer Wartung des Fahrzeugs.

Als Konsequenz daraus werden bislang die beteiligten Bauteile unmittelbar ersetzt, wozu zumindest ein Stillstand des Fahrzeuges erforderlich ist, was naturgemäß mit erheblichen Kosten verbunden ist, insbesondere resultierend aus den Stillstandszeiten des Fahrzeuges sowie gegebenenfalls aus der Ersatzteilbeschaffung und den Montage- bzw. Demontagearbeiten.

Der Erfindung liegt die Aufgabe zugrunde, ein Verfahren zu entwickeln, dass die Standzeit der Scheibenbremse erhöht und deren Funktionssicherheit optimiert wird.

Diese Aufgabe wird durch die Merkmale der unabhängigen Ansprüche gelöst.

Ein erfindungsgemäßes Verfahren zum Erhöhen der Betriebssicherheit zumindest eines thermisch belasteten Funktionsteils zumindest einer Bremse eines Fahrzeugs, insbesondere ein Nutzfahrzeug und/oder ein Anhänger, und/oder zum Verringern eines Bremsverschleißes und/oder einer Antriebsenergie, wobei das Verfahren die folgenden Schritte aufweist:
Einlesen eines Temperatursignals der zumindest einen Bremse, welches zumindest eine durch zumindest einen Sensor erfasste Temperatur der Bremse und/oder eines Funktionsteils der Bremse repräsentiert, und Einlesen eines Bremsanforderungssignals und/oder Bremsdrucksignals für die zumindest eine Bremse;
Bestimmen eines thermischen Fehlerfalls unter Verwendung des Temperatursignals und des Bremsanforderungssignals und/oder Bremsdrucksignals; und Bereitstellen eines angepassten Bremsanforderungssignals und/oder angepassten Bremsdrucksignals unter Verwendung des bestimmten thermischen Fehlerfalls, um die Betriebssicherheit des zumindest einen thermisch belasteten Funktionsteils der zumindest einen Bremse zu erhöhen und/oder das Verringern des Bremsverschleißes und/oder der Antriebsenergie zu erzielen.

Das erfindungsgemäße Verfahren stellt sich sozusagen als Thermomanagement dar, das nicht nur die betriebsbedingten Temperaturen mittels Sensoren erfasst, die betriebsbedingten Temperaturen als ein die Temperatur repräsentierendes Temperatursignal bereitstellt und auswertet, sondern im Bedarfsfall die Funktionsteile, so weit dies möglich ist, nachregelt. So wird unter Verwendung des Temperatursignals ein Regelsignal bereitgestellt, welches eines Führungsgröße für zumindest ein Funktionsteil darstellt. Dabei erfolgt die Nachregelung rechnergesteuert. Das Verfahren kann an einer Bremse oder in einem Bremssystem ausgeführt werden. Dabei kann es sich bei der Bremse beispielsweise um eine Scheibenbremse oder eine Trommelbremse handeln.

D.h., im Gegensatz zum Stand der Technik, bei dem lediglich die Möglichkeit besteht, nach einer Erfassung der Temperaturen und deren Sollwertüberschreitung ein Signal zu aktivieren, um die betreffenden Funktionsteile direkt auszutauschen, wird durch die Erfindung erreicht, diese Funktionsteile in einen neuen betriebssicheren Zustand zu führen, ohne dass entsprechende Bauteil sofort auszutauschen. Dadurch wird vorteilhaft die Wirtschaftlichkeit erhöht, da Standzeiten der Radbremsen beziehungsweise der betreffenden Funktionsteile erhöht werden.

Dabei kann in einer noch weiteren Ausführung die Signalweitergabe drahtlos erfolgen. Das bedeutet, dass eine Signalübertragung vom Sensor zur Auswerteeinrichtung und von dort ggf. zu einem Aktuator drahtlos, also über Funk oder dergleichen, erfolgt, wobei die Regelung der Funktionsteile unter Berücksichtigung des Zustands der Scheibenbremse erfolgt.

Die Temperaturmessung kann an unterschiedlichen Funktionsteilen direkt oder indirekt erfolgen. So kann das zumindest eine Temperatur zumindest eines Funktionsteils repräsentierende Temperatursignal von einem Temperatursensor, wie beispielsweise einem Thermoelement, einem Widerstandsthermometer oder einem berührungslosen messenden Thermometer wie beispielsweise ein Strahlungsthermometer bereitgestellt werden oder von einem anderen Sensorsignal abgeleitet werden, Ein entsprechender Sensor kann beispielsweise an einem Polrad, an der Bremsscheibe der Scheibenbremse, an einem oder beiden Bremsbelägen oder an einem Bremssattelteil, ebenso an elektronischen Bauteilen nach Art von separaten oder integrierten Thermoelementen, wie sie für eine Temperaturkompensation Verwendung finden, angeordnet werden. In diesem Fall erfolgt die Temperaturmessung an Belag-Verschleißsensoren, die in den Bremsbelägen integriert sind.

In besonders bevorzugter Ausführung kann die Temperaturmessung unter Verwendung eines Polrads und/oder eines ABS-Sensors erfolgen. Damit kann vorteilhaft ein Sensor für zwei Funktionen verwendet werden. So kann eine Signalamplitude des Polradsensors kann eine Temperatur eines Funktionsteils repräsentieren, wobei die Frequenz der Drehzahl und die Amplitude der Temperatur entsprechen. Hierbei ist jedoch zu berücksichtigen, dass bei Anbindung des Polrades an der Bremsscheibe deren Bauart, je nachdem, ob beispielsweise eine Topfscheibe oder Halsscheibe Verwendung findet, und die Position des Polrads, einen Einfluss auf den zeitlichen Verlauf des Temperatursignals und die Höhe der Temperatur nimmt. Das Verfahren kann diese Unterschiede durch eine Plausibilisierung der Daten mit einem elektronischen Bremssystem (EBS) erkennen, wobei Bremsdruck, Bremsdauer und Geschwindigkeit zur Bestimmung der umgesetzten Bremsenergie genutzt werden.

Als berührungslose Temperatursensoren können Strahlungspyrometer zum Einsatz kommen, wobei im Fall einer Scheibenbremse bevorzugt auf beiden Seiten der Bremsscheibe jeweils ein Strahlungspyrometer vorgesehen ist.

Als Strahlungspyrometer kann ein Infrarotthermometer in Form beispielsweise eines Schmalbandpyrometers, mit Germanium-Photodiode oder Indium-Gallium-Arsenid-Photodiode oder Bandstrahlungspyrometer Verwendung finden, ebenso wie ein Quotienten-Pyrometer.

Thermisch beeinträchtigte Zustände der Bremse, wie z.B. einer Scheibenbremse, ergeben sich beispielsweise aus verglasenden Bremsbelägen, die sich durch zu geringen Anpressdruck und zu geringe Temperatur an den Bremsbelägen ergeben, wobei es zu einem Verlust des Reibwertes der Bremsbeläge kommt. Dies kann sich z.B. durch den überwiegenden Einsatz von Dauerbremsanlagen, wie z.B. Retardern und anderen sekundären Zusatzbremssystemen mit Bremsenergierückgewinnung, wie beispielsweise in Hybridfahrzeugen eingesetzt, ergeben. Hier wird beim Bremsvorgang lediglich ein geringer Bremsdruck eingebracht und es werden nur geringe Temperaturen erreicht.

Eine Ausführung sieht vor, dass bei einem zu geringem Bremsdruck und/oder zu geringer Temperatur an der Scheibenbremse unterstützende Bremsen, wie Retarder oder rekuperative Bremsen, abgeschaltet werden und der zu geringe Bremsdruck in entsprechender Weise erhöht wird. Dadurch kann ein Verglasen verhindert werden.

Im Fall der Erkennung von zu geringem Bremsdruck und einer zu geringen Temperatur an der Bremse bzw. den benachbarten Bauteilen, wie einer zugeordneten Achse, kann ein Lastausgleich zwischen einer Mehrzahl von Bremsen angefordert oder initiiert werden. So kann im Fall der Erkennung von zu geringem Bremsdruck und einer zu geringen Temperatur an der Bremse bzw. den benachbarten Bauteilen, wie einer zugeordneten Achse, von einem Steuergerät (ECU) eine Anforderung an eine Regeleinrichtung geschickt werden, sodass im Fall des Vorliegens von verglasten Belägen unterstützende Bremsen abgeschaltet werden, um die Bremskraft und in der Folge die Temperatur an der Bremse mit verglasenden Belägen zu erhöhen. Unterstützende Bremsen können Retarder sein oder an der Achse oder dem Antriebsstrang angebrachte rekuperative Bremsen. D.h., fallweise kommen die Betriebsbremsen vor einer Motorbremse und/oder den Retardern oder rekuperativen Bremsen zum Einsatz. So kann eine größere Bremskraft auf die verglasenden Bremsbeläge ausgeübt werden ohne eine Gesamtverzögerung des Fahrzeugs zu erhöhen, wobei die dadurch erhöhte Bremskraft auf die verglasenden Bremsbeläge dem Zustand des Verglasens entgegengewirkt und der Reibwert der Bremsbeläge wieder erhöht wird.

Dadurch wird die Grundtemperatur der Bremse, wie z.B. einer Scheibenbremse auf einem definiert erhöhten Niveau gehalten, sodass der genannte Kaltverschleiß bzw. das Verglasen der Bremsbeläge vermieden wird. Vorteilhaft ist ferner die Möglichkeit des Fahrzeugführers, anhand einer Anzeige die übertragenen Signale bei Überschreiten einer Soll-Temperatur aller Scheibenbremsen zu erkennen und danach zu reagieren, um so eine entsprechende Dauerbelastung der Scheibenbremsen zu vermeiden.

Eine geringfügig konstante Erhöhung der Temperatur bei drehendem Rad an den Bremsbelägen kann auf einen vorübergehenden Fehlzustand der mechanischen Bremse, z.B. der Führung des Bremsbelages oder der Bremssattel-Führung hinweisen.

Wird dieser Zustand erkannt, kann einmalig ein höherer Bremsdruck bei der nächsten Bremsung auf die Scheibenbremse aufgebracht werden, um ein Lösen der klemmenden Führung zu erreichen. Alternativ kann bei einem stehenden Fahrzeug die Bremse betätigt werden, um ein Lösen einer klemmenden Führung zu erreichen. Falls dies zu keiner Verbesserung der Fehlfunktion führt, kann die Bremsanforderung auf die Scheibenbremse reduziert und ein optischer und/oder akustischer Warnhinweis ausgelöst werden.

Ein Heißlaufen der Bremse kann aufgrund einer Fehlfunktion eintreten, die sich aus einem nicht mehr ausreichenden Lüftspiel für die Freigängigkeit der Bremsscheibe und eines sich einstellenden Restbremsmoments ergibt. In einem solchen Zustand der Bremse auftretende Wärme kann zu einem selbstverstärkenden Effekt führen.

Dieses Restbremsmoment, verursacht durch eine thermische Ausdehnung der Bremsscheibe und/oder Bremsbeläge, kann durch ein aktives Wegführen der Bremsbeläge von der Bremsscheibe (Lüftspielvergrößerung), z.B. mithilfe eines bidirektionalen Nachstellers, kompensiert werden. Mit Hilfe der Erfindung kann diese aktiv gesteuerte Lüftspielvergrößerung initiiert werden. So kann durch eine einmalige große Bremsanforderung und/oder durch Reduzierung der Bremsanforderung, die Bremse wieder in einen funktionstüchtigen Zustand versetz werden, bzw. ein unerwünschtes Fehlverhalten vermieden werden.

Wie bereits zum Stand der Technik erwähnt, kann es durch lang anhaltende Bergabfahrten zu einer dauerhaft erhöhten Temperatur der Scheibenbremse kommen, aus der sich ein unzulässiger Betriebszustand ergibt.

Mithilfe der Erfindung besteht hier bei lang anhaltenden hohen Temperaturen während einer Bremsung die Möglichkeit, die Bremsanforderung zwischen den den jeweiligen Rädern zugeordneten Bremsen, bzw. Scheibenbremsen so zu verteilen, dass nicht eine Bremse oder die Bremsen einer Achse mit einer erhöhten Temperatur belastet werden, sondern alle Bremsen derart, dass die Temperatur an der heißesten Scheibenbremse reduziert wird. Hierbei wird die Bremsanforderung auf diese Bremse reduziert und die auf die anderen erhöht, bei gleicher oder sogar gesteigerter Fahrzeug-Verzögerung.

So kann in einer weiteren Ausführung bei Erkennung der konstant höheren Temperatur nach einer Bremsung mit höherem Bremsdruck ein akustisches und/oder optisches Signal ausgegeben werden. Dies ist vorteilhaft, da so der Fahrer vorgewarnt wird.

Eine weitere Warnung kann in einer noch weiteren Ausführung bei Erkennung einer dauerhaft erhöhten Temperatur, insbesondere bei lang anhaltenden Bergabfahrten des Fahrzeuges, erfolgen, indem ein Warnsignal bereitgestellt wird.

Eine Optimierung des thermischen Bremsenzustands kann dadurch erreicht werden, dass die Verteilung der Bremsenanforderung nur in einem fahrstabilen Bereich erfolgt, d.h. im niedrigen Bremsdruck- und Verzögerungsbereich. Dabei kann ein Ausgleich der Bremsleistung zwischen einer Mehrzahl von Bremsen einer Achse erfolgen. Dabei kann ein Ausgleich der Bremsleistung zwischen Bremsen einer Mehrzahl von Achsen erfolgen. Um die Performance bei Notbremsung und Vollbremsung zu erhalten, kann die Bremsanforderungsverteilung auf den fahrstabilen Bereich beschränkt eingesetzt werden. Der fahrstabile Bereich kann im niedrigen Bremsdruck und Verzögerungsbereich angeordnet sein. So kann ein Optimieren der Wirksamkeit der Bremse in Abhängigkeit des thermischen Betriebszustands erzielt werden.

Dementsprechend kann in einer Ausführung der Bremsdruck in einem fahrstabilen Zustand des Fahrzeugs angepasst werden, insbesondere bei einem niedrigen Bremsdruck und/oder niedrigen Verzögerungswerten, insbesondere bei einem Bremsdruck kleiner 7 bar, insbesondere kleiner 5 bar, insbesondere kleiner 3 bar, insbesondere bei einem Verzögerungswert kleiner 3m/s. Damit kann eine vorteilhafte Anpassungsfähigkeit erreicht werden.

Dies erfolgt nur in einem fahrstabilen Zustand, der durch niedrigen Druck gekennzeichnet ist. Bei Vollbremsung/Nothalt werden alle Bremsen ohne Einschränkung betätigt.

i Wird durch die Auswerteeinheit eine Abnahme der Reibarbeit einer Bremse, z.B. durch verringerte Temperatur-Emission oder einen verringerten Emissionswert und damit einen verringerten Reibwert der Reibpaarung, erkannt, so kann eine sogenannte Putzbremsung initiiert werden. Der beschriebene Zustand kann durch eine vorangegangene hohe thermische Belastung z.B. bei einer Scheibenbremse verursacht sein, insbesondere mit Materialübertrag auf die Bremsscheibe oder durch eine über einen längeren Zeitraum wenig benutzte Bremse, was auch als "einschlafende" Beläge bekannt ist.

Bei einer Anpassungsbremsung kleiner 0,3g wird die Bremsung ungleichmäßig, d.h. innerhalb fahrstabiler Parameter, auf die Bremsen verteilt werden, sodass die thermisch beeinträchtigte Bremse eine Bremsdruckanforderung erhält, die ein Putzen der Bremsbelag-Oberfläche bewirkt. Nicht thermisch beanspruchte Scheibenbremsen erhalten eine um dieses Maß reduzierte Bremsanforderung.

Dazu kann in einer anderen Ausführung eine Abnahme der Reibarbeit der Scheibenbremse anhand verringerter Temperatur-Emissionen und/oder eines verringerten Emissionswertes und/oder bei einer Temperatur unter einem Temperatur-Schwellwert bei einem Bremsdruck unter einem Bremsdruckschwellwert ermittelt werden.

Bei Ermittlung einer Anpassungsbremsung kleiner 0,3 g kann in einer noch anderen Ausführung auf die Scheibenbremsen ein unterschiedlicher Bremsdruck aufgebracht werden.

Bei Bremsanforderungen für einen Nothalt, d.h. größer 0,3g, oder ABS-RegelFall wird keine Verteilung der Bremsanforderung durchgeführt. Der Ausgleich der Bremsanforderung kann im Übrigen auch diagonal erfolgen, d.h. beispielsweise vorne rechts und hinten links. So kann vorteilhaft ein fahrstabiler Zustand eingehalten werden.

Die Höhe der Temperatur und der zeitliche Verlauf der Temperaturerhöhung und Temperaturabkühlung nach einer erfolgten Bremsung kann sich zwischen zwei Fahrzeugen aufgrund verschiedenster Fahrzeug-Konfigurationen und Radhausgestaltungen beispielsweise bei Bussen und Lkws unterscheiden. Dies kann in einem Ersatzmodell abgebildet werden. Um hier entsprechende Parameter zu erhalten, kann nach Aufbringen des Bremsdrucks überprüft werden, innerhalb welcher Zeit sich welche Temperatur einstellt.

So kann in einer Ausführung während einer Bremsung überprüft werden, innerhalb welcher Zeit und/oder eingebrachtem Bremsdruck welche Temperaturen erreicht werden, um einen Temperaturverlauf über die Zeit und/oder über einen Bremsdruckverlauf zu bestimmen und den thermischen Fehlerfall unter Verwendung des Temperaturverlaufs zu bestimmen. Dabei ergibt sich der Vorteil einer Fehlerbestimmung, anhand welcher Maßnahmen zur Fehlerabstellung getroffen werden können.

Dabei kann durch Vergleich mit anderen Rädern beziehungsweise Bremsen des Fahrzeugs eine Überprüfung des abgegebenen Signals durchgeführt werden. Das Ersatzmodell kann die Wärmeleitung bzw. den Wärmeübergang und ergänzend oder alternativ die Wärmekapazität und Kühlung der Bremse, der angrenzenden Bauteile sowie ergänzend oder alternativ der Umgebung abbilden.

Ein erfindungsgemäßes Steuergerät zur Ausführung des oben beschriebenen Verfahrens zum Erhöhen der Betriebssicherheit zumindest eines thermisch belasteten Funktionsteils zumindest einer Bremse eines Fahrzeug, insbesondere eines Nutzfahrzeugs und/oder eines Anhängers, nach einem der vorhergehenden Ansprüche und/oder zum Verringern eines Bremsverschleißes und/oder einer Antriebsenergie, weist folgenden Einrichtungen auf:
eine Schnittstelle zum Einlesen eines Temperatursignals der zumindest einen Bremse, welches zumindest eine durch zumindest einen Sensor erfasste Temperatur der Bremse und/oder eines Funktionsteils der Bremse repräsentiert, und Einlesen eines Bremsanforderungssignals und/oder Bremsdrucksignals für die zumindest eine Bremse; eine Bestimmungseinrichtung zum Bestimmen eines thermischen Fehlerfalls unter Verwendung des Temperatursignals und des Bremsanforderungssignals und/oder Bremsdrucksignals; und eine Bereitstellungseinrichtung zum Bereitstellen eines angepassten Bremsanforderungssignals und/oder angepassten Bremsdrucksignals unter Verwendung des thermischen Fehlerfalls, um die Betriebssicherheit des zumindest einen thermisch belasteten Funktionsteils der zumindest einen Bremse und/oder das Verringern des Bremsverschleißes und/oder der Antriebsenergie zu erzielen. Damit kann das oben beschriebene Verfahren vorteilhaft ausgeführt werden.

Das Steuergerät kann so ausgebildet sein, um die Schritte einer Variante eines hier vorgestellten Verfahrens in entsprechenden Einrichtungen durchzuführen bzw. umzusetzen. Unter einem Steuergerät kann ein elektrisches Gerät oder eine elektrische Schaltung, beispielsweise eine integrierte Schaltung verstanden werden. Unter einem Steuergerät kann auch eine Regeleinrichtung, eine ECU oder eine Steuereinrichtung verstanden werden. Das Steuergerät kann ein Teil eines elektronischen Bremssystems sein. Das Steuergerät kann ausgebildet sein, um über geeignete Schnittstellen Signale zu empfangen und auszugeben. Auch durch das Steuergerät kann die der Erfindung zugrunde liegende Idee kann durch das Steuergerät effizient umgesetzt werden.

Unter einem Steuergerät kann vorliegend ein elektrisches Gerät verstanden werden, das Sensorsignale verarbeitet und in Abhängigkeit der Sensorsignale Steuer- und/oder Datensignale ausgibt. Die Schnittstellen der Steuereinrichtung können hard- und/ oder softwaremäßig ausgebildet sein. Bei einer hardwaremäßigen Ausbildung können die Schnittstellen beispielsweise Teil eines sogenannten System-ASICs sein, der verschiedenste Funktionen der Steuereinrichtung beinhaltet. Die Schnittstellen können jedoch auch als eigene, integrierte Schaltkreise ausgebildet sein oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Eine Bremse für ein Fahrzeug, insbesondere ein Nutzfahrzeug und/oder ein Anhänger, ist dazu ausgebildet, ein Temperatursignal bereitzustellen und/oder eine angepasste Bremsanforderung zur Erhöhung der Betriebssicherheit zumindest eines thermisch belasteten Funktionsteils der Bremse und/oder zum Verringern eines Bremsverschleißes und/oder einer Antriebsenergie zu empfangen. Besonders bevorzugt ist dabei, dass die Temperaturmessung einen Polradsensor und/oder einen ABS-Sensors aufweist, wobei die Amplitude des Signals des Polradsensors eine Temperaturinformation repräsentiert.

Ein Bremssystem für ein Fahrzeug, insbesondere ein Nutzfahrzeug und/oder ein Anhänger, umfasst das oben beschriebene Steuergerät, eine erste oben beschriebene Bremse angeordnet auf einer Achse; und eine zweite oben beschriebene Bremse, die auf der Achse in Bezug zu einer Fahrzeuglängsachse auf einer der ersten Bremse gegenüberliegenden Seite der Achse oder auf einer weiteren Achse angeordnet ist.

Ein Fahrzeug, insbesondere ein Nutzfahrzeug und/oder ein Anhänger, weist das oben beschriebene Bremssystem auf.

Von Vorteil ist auch ein Computerprogrammprodukt mit Programmcode, der auf einem maschinenlesbaren Träger wie einem Halbleiterspeicher gespeichert sein kann und zur Durchführung des Verfahrens nach einer der vorstehend beschriebenen Ausführungsformen verwendet wird, wenn das Computerprogrammprodukt auf einer Steuereinrichtung oder einem Steuergerät ausgeführt wird.

Im Übrigen kann über ein Update einer Software für ein elektronisches Bremssystem (EBS) das erfindungsgemäße Verfahren so aktualisiert werden, dass neue Fehler-Zustände, wie sie im Feldbetrieb oder im Feldversuch ermittelt sind, hinterlegt werden.

Durch die Information der Temperatur und des Verschleißes können die Bremsen in der Art betrieben werden, dass die Bremsleistung einschließlich des Bremsverschleißes optimiert wird. Die Standzeiten, insbesondere der Bremsbeläge der einzelnen an einem Fahrzeug zum Einsatz kommenden Scheibenbremsen können somit angeglichen werden.

Ein weiterer Vorteil ergibt sich in einer Ausführung, wenn ermittelte Werte hinsichtlich Fehlerzuständen und Verschleiß über ein Fahrtenbuch- oder Geolokalisationssysteme an Werkstätten zur Bereitstellung von Ersatzteilen, oder Planung von Service-Intervallen übermittelt werden. Dies betrifft insbesondere die Bereitstellung von Ersatzteilen, wie Bremsbelägen, Austauschbremsen sowie die Planung von Service-Intervallen, die über die thermische Erkennung des Zustandes der Scheibenbremse möglich ist.

Bevorzugte Ausführungsbeispiele der vorliegenden Erfindung werden nachfolgend Bezug nehmend auf die beiliegenden Zeichnungen näher erläutert.

Es zeigen:
- Fig. 1: eine schematische Blockdarstellung eines Fahrzeugs mit einem Bremssystem gemäß einem Ausführungsbeispiel der vorliegenden Erfindung;
- Fig. 2: ein Flussdiagramm eines Verfahrens gemäß einem Ausführungsbeispiel der vorliegenden Erfindung; und
- Fig. 3: eine tabellarische Übersicht thermischer Fehlerfälle gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

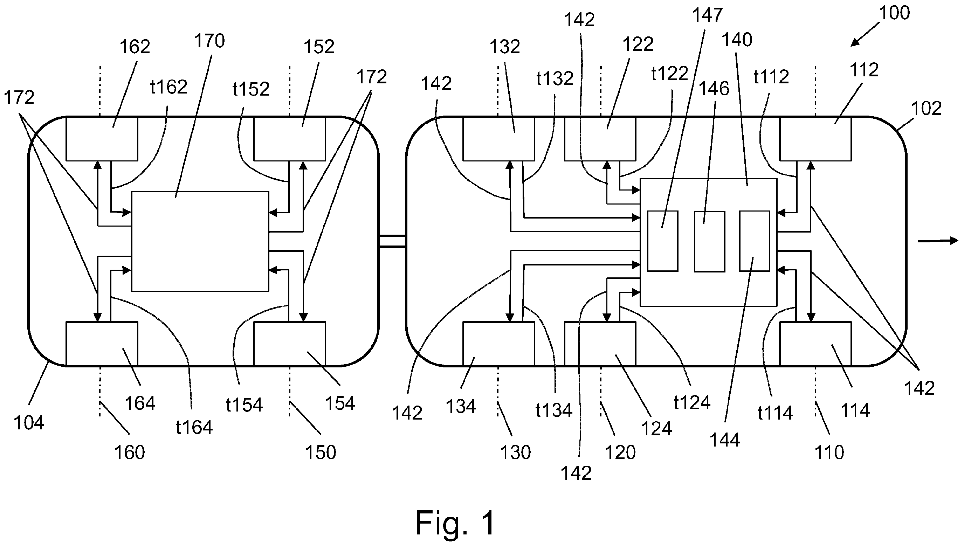

Fig. 1 zeigt eine schematische Blockdarstellung eines Fahrzeugs 100 mit einem Bremssystem gemäß einem Ausführungsbeispiel der vorliegenden Erfindung. Das Fahrzeug 100 umfasst in dem dargestellten Ausführungsbeispiel ein Nutzfahrzeug 102 sowie einen Anhänger 104. Eine Vorwärtsfahrtrichtung ist mit einem Pfeil angegeben.

Das Nutzfahrzeug 102 weist drei Achsen 110, 120, 130 auf, mit jeweils zwei Bremsen 112, 114, 122, 124, 132, 134 auf, wobei jeweils eine Bremse 112, 122, 132 auf der in Fahrtrichtung des Nutzfahrzeugs 102 rechten Fahrzeugseite und eine Bremse 114, 124, 134 auf der linken Fahrzeugseite angeordnet ist. Weiterhin weist das Nutzfahrzeug 102 ein Steuergerät 140 auf. Die Bremsen sind ausgebildet, jeweils zumindest ein Temperatursignal t112, t114, t122, t124, t132, t134 bereitzustellen, welches über eine jeweilige Signalleitung dem Steuergerät 140 zugeführt und von dem Steuergerät 140 eingelesen wird. Das Steuergerät 140 ist ausgebildet, je Bremse 112, 114, 122, 124, 132, 134 ein Bremsanforderungssignal 142 bereitzustellen. Das Bremsanforderungssignal 142 wird über eine jeweils zugehörige Signalleitung an eine jede Bremse 112, 114, 122, 124, 132, 134 übertragen.

Der Anhänger 104 weist zwei Achsen 150, 160 mit jeweils zwei Bremsen 152, 154, 162, 164 auf, wobei jeweils eine Bremse 152, 162 auf der in Fahrtrichtung des Anhängers 104 rechten Fahrzeugseite und eine Bremse 154, 164 auf der linken Fahrzeugseite angeordnet ist. Weiterhin weist der Anhänger 104 ein Anhängersteuergerät 170 auf. Die Bremsen 152, 154, 162, 164 sind ausgebildet, jeweils zumindest ein Temperatursignal t152, t154, t162, t164 bereitzustellen, welches über eine jeweilige Signalleitung dem Anhängersteuergerät 170 zugeführt und von dem Anhängersteuergerät 170 eingelesen wird. Das Anhängersteuergerät 170 ist ausgebildet, je Bremse 152, 154, 162, 164 ein Bremsanforderungssignal 172 bereitzustellen. Das Bremsanforderungssignal 172 wird über eine jeweils zugehörige Signalleitung an eine jede Bremse 152, 154, 162, 164 übertragen.

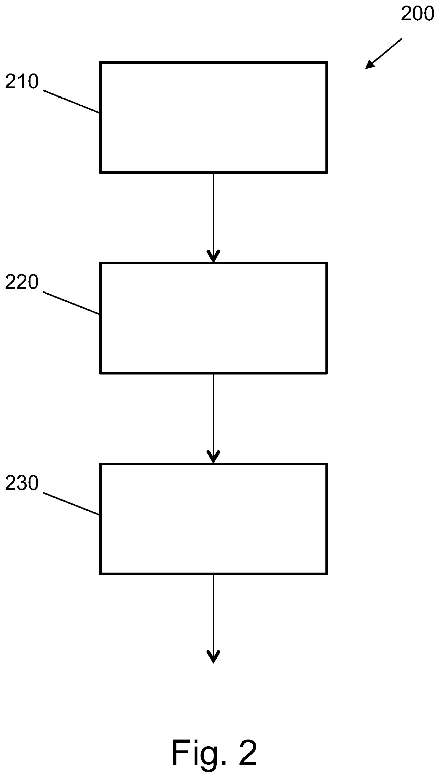

Die Steuergeräte 140, 170 sind ausgebildet, jeweils das in Fig. 2 beschriebene Verfahren auszuführen. In einem ersten Ausführungsbeispiel ist das Steuergerät 140 im Nutzfahrzeug ausgebildet, das Verfahren für die Bremsen des Nutzfahrzeugs 102 sowie für die Bremsen des Anhängers 104 auszuführen. In einem alternativen Ausführungsbeispiel ist das Anhängersteuergerät 170 des Anhängers 104 ausgebildet, das Verfahren für die Bremsen des Anhängers unabhängig von dem Nutzfahrzeug 102 auszuführen.

Das Verfahren wird ausgesetzt im Falle eines Nothalts/einer Vollbremsung oder einem einen fahrstabilen Zustand verlassenden Zustand der Fahrzeuge 102, 104. Ein Ausgleich einer Bremsanforderung erfolgt innerhalb einer Achse, zwischen zwei Achsen, Diagonal (z.B.: VR/HL) über das Fahrzeug 100, 102, 104 oder zwischen Nutzfahrzeug 102 und Anhänger 104.

Die meisten Bremsungen bei den üblichen Fahrzeugkonfigurationen finden im unteren Bremsdruck- und Verzögerungsbereich statt. Um die Performance bei Notbremsung und Vollbremsung zu erhalten, wird die Bremsanforderungsverteilung nur im fahrstabilen Bereich eingesetzt, der im niedrigen Bremsdruck und Verzögerungsbereich angeordnet ist.

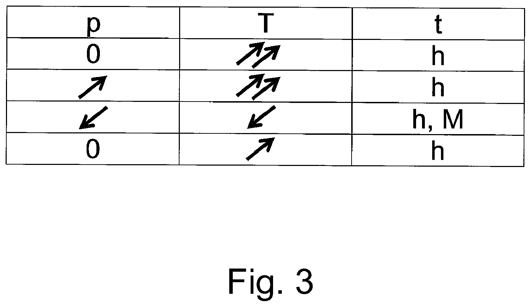

Die Steuergeräte 140, 170 sind ausgebildet, eine Zustandsüberwachung der Bremsen der Fahrzeuge 102, 104 durchzuführen. Durch die Information über ihre jeweilige Temperatur und ihren jeweiligen Verschleiß können die Bremsen in der Art betrieben werden, dass Bremsleistung und Verschleiß am Fahrzeug 100 optimiert werden und die Belag-Verschleiß- respektive Belag-Standzeiten innerhalb des Fahrzeugs/Anhängers angeglichen werden. Die Bremsanforderung kann somit in Abhängigkeit der Zustandsüberwachung verändert an die einzelnen Bremsen geleitet werden. Fig. 3 erläutert verschiedene thermische Fehlerfälle und Möglichkeiten, diese eventuell zu reparieren oder eine entsprechende Warnung auszugeben. Durch Speicherung der erkannten thermischen Fehlerfälle kann eine vorausschauende Wartung geplant werden.

Das Steuergerät 140 weist in diesem Beispiel die folgenden Einrichtungen auf: eine Schnittstelle 144 zum Einlesen eines Temperatursignals der zumindest einen Bremse, welches zumindest eine durch zumindest einen Sensor erfasste Temperatur der Bremse und/oder eines Funktionsteils der Bremse repräsentiert, und Einlesen eines Bremsanforderungssignals und/oder Bremsdrucksignals für die zumindest eine Bremse; eine Bestimmungseinrichtung 146 zum Bestimmen eines thermischen Fehlerfalls unter Verwendung des Temperatursignals und des Bremsanforderungssignals und/oder Bremsdrucksignals; und eine Bereitstellungseinrichtung 148 zum Bereitstellen eines angepassten Bremsanforderungssignals und/oder angepassten Bremsdrucksignals unter Verwendung des thermischen Fehlerfalls, um die Betriebssicherheit des zumindest einen thermisch belasteten Funktionsteils der zumindest einen Bremse und/oder das Verringern des Bremsverschleißes und/oder der Antriebsenergie zu erzielen.

Das Anhängersteuergerät 170 kann in gleicher Weise aufgebaut sein.

In einem nicht gezeigten Ausführungsbeispiel sind das Steuergerät 140 des Nutzfahrzeugs 102 und das Anhängersteuergerät 170 des Anhängers 104 miteinander gekoppelt. So kann bei Auftreten und Erkennen eines thermischen Fehlers eine Bremsanforderung zwischen dem Anhänger 104 und dem Nutzfahrzeug 102 verteilt werden. In einem anderen Ausführungsbeispiel arbeiten die beiden Steuergeräte 140, 170 unabhängig voneinander. In einem weiteren Ausführungsbeispiel weist das Fahrzeug 100 ein Steuergerät 140 auf, welches eine Bremsanforderung bei einem erkannten thermischen Fehler auf die Achsen 110, 120, 130 des Nutzfahrzeugs 102 sowie die Achsen 150, 160 des Anhängers 104 verteilt.

Fig. 2 zeigt ein Verfahren 200 gemäß einem Ausführungsbeispiel der vorliegenden Erfindung. Das Verfahren 200 zum Erhöhen der Betriebssicherheit zumindest eines thermisch belasteten Funktionsteils zumindest einer Bremse für ein Fahrzeug und ergänzend oder alternativ zum Verringern eines Bremsverschleißes und ergänzend oder alternativ zum Verringern einer Antriebsenergie, umfasst einen Schritt 210 des Einlesens, einen Schritt 220 des Bestimmens sowie einen Schritt 230 des Bereitstellens. Bei dem Fahrzeug kann es sich um eine Variante eines in Fig. 1 gezeigten Ausführungsbeispiel eines Fahrzeugs 100 handeln.

Im Schritt 210 des Einlesen wird ein Temperatursignal der zumindest einen Bremse 112, 114, 122, 124, 132, 134, 152, 154, 162, 164 des Fahrzeugs 100, welches zumindest eine durch zumindest einen Sensor erfasste Temperatur der Bremse 112, 114, 122, 124, 132, 134, 152, 154, 162, 164 des Fahrzeugs 100 und/oder eines Funktionsteils der Bremse 112, 114, 122, 124, 132, 134, 152, 154, 162, 164 des Fahrzeugs 100 repräsentiert, sowie ein Bremsanforderungssignal und ergänzend oder alternativ ein Bremsdrucksignal für die zumindest eine Bremse 112, 114, 122, 124, 132, 134, 152, 154, 162, 164 des Fahrzeugs 100 eingelesen. Im Schritt 220 des Bestimmens wird ein thermischer Fehlerfall unter Verwendung des Temperatursignals und des Bremsanforderungssignals und/oder Bremsdrucksignals bestimmt. Im Schritt 230 des Bereitstellens wird ein angepasstes Bremsanforderungssignal und/oder angepasstes Bremsdrucksignal unter Verwendung des thermischen Fehlerfalls bereitgestellt, um die Betriebssicherheit des zumindest einen thermisch belasteten Funktionsteils der zumindest einen Bremse112, 114, 122, 124, 132, 134, 152, 154, 162, 164 des Fahrzeugs 100 zu erhöhen und/oder das Verringern des Bremsverschleißes und/oder der Antriebsenergie zu erzielen.

Fig. 3 zeigt eine tabellarische Übersicht thermischer Fehlerfälle gemäß einem Ausführungsbeispiel der vorliegenden Erfindung. Jede Spalte zeigt einen thermischen Fehlerfall einer Bremse eines Fahrzeugs. Die erste Zeile repräsentiert den Fehlerfall des Heißlaufens, die zweite Zeile repräsentiert den Fehlerfall eines Missbrauchs, wie beispielsweise während oder nach einer Bergabfahrt, die dritte Zeile zeigt einen Fehlerfall des Verglasens und die vierte Zeile zeigt einen Fehlerfall einer klemmenden Führung. Die erste Spalte repräsentiert den Zustand des Bremsdrucks, die zweite Spalte repräsentiert die Temperatur und die dritte Spalte repräsentiert den zeitlichen Verlauf.

Die nach rechts oben zeigenden Pfeile symbolisieren ein Ansteigen des jeweiligen Spaltenwertes, wohingegen die nach links unten zeigenden Pfeile ein Abnehmen des jeweiligen Spaltenwertes bedeuten.

In der dritten Spalte bedeutet der Buchstabe "h" den Zeitwert "Stunde" und der Buchstabe "M" den Zeitwert "Monat".

Der Fehlerfall des Heißlaufens kann durch eine Fehlfunktion der Bremse bedingt sein, wenn beispielsweise kein ausreichendes Lüftspiel für die Freigängigkeit der Bremsscheibe mehr dargestellt werden kann. An einer solchen Bremse auftretende Wärme führt zu einem selbstverstärkenden Effekt. Der Fehlerfall des Heißlaufens ist charakterisiert durch eine über einen langen Zeitraum anhaltend (stark) erhöhte Temperatur ohne eine anliegende Bremsanforderung beziehungsweise anliegendes Bremsdrucksignal. Hier kann durch eine einmalige große Bremsanforderung (beispielsweise Bremsdruck größer 8 bar über zumindest eine Sekunde) und/oder durch Reduzierung der Bremsanforderung die Bremse wieder in einen funktionstüchtigen Zustand versetzt werden, bzw. ein unerwünschtes Fehlverhalten vermieden werden.

Im Fehlerfall des Missbrauchs beispielsweise durch langanhaltende Bergabfahrten kann es zu einer dauerhaften erhöhten Temperatur der Bremse kommen, die zwar notwendig ist, aber einen unzulässigen Betriebszustand darstellt. In dem Falle von lang anhaltenden Temperaturen über einem definierten Schwellwert während einer Bremsung besteht die Möglichkeit die Bremsanforderung zwischen den Rädern/Achsen so zu verteilen, dass nicht eine Bremse/ Achse mit einer erhöhten Temperatur belastet wird, sondern alle Achsen so belastet werden, dass die Temperatur an der heißesten Bremse reduziert wird, indem die Bremsanforderung auf diese Bremse/Achse reduziert wird und die Bremsanforderung auf die anderen erhöht werden - jeweils bei gleicher (oder besserer) Gesamt-Fahrzeug-Verzögerung.

Der Fehlerfall des Verglasens ist durch eine erhöhte Temperatur bei niedrigen Bremsdrücken über einen langen Zeitraum charakterisiert. Durch zu geringen Anpressdruck und zu geringe Temperatur an den Belägen kommt es zu einem Verlust des Reibwertes der Beläge. Dies kann beispielsweise ausgelöst werden durch den überwiegenden Einsatz von Retarder und sekundären Zusatzbremssystemen. Hier werden beim Bremsen nur ein geringer Bremsdruck eingebracht und nur geringe Temperaturen erzeugt. Als Gegenmaßnahme wird die Bremsanforderung an die entsprechende Bremse erhöht, indem eine andere Achse komplett ungebremst bleibt und somit ein stärkerer Bremsdruck an die Achse mit den verglasenden Belägen gegeben werden kann, oder indem ein zeitweises Abschalten von Retarder und sekundären Zusatzbremsen erfolgt.

Der Fehlerfall eines vorübergehenden mechanischen Fehlzustands wie beispielsweise einer klemmenden Führung ist charakterisiert durch eine erhöhte Temperatur ohne anliegendes Bremsdrucksignal über einen längeren Zeitraum, beispielsweise Stunden. Eine geringfügig in einem Toleranzbereich konstante Erhöhung der Temperatur an den Belägen bei drehendem Rad kann auf einen vorrübergehenden Fehlzustand der mechanischen Bremse, zum Beispiel der Führung des Belages oder der Sattelführung hinweisen. Wenn dieser Zustand erkannt wird, wird einmalig ein höherer Bremsdruck bei der nächsten Bremsung zu dieser Bremse/Achse eingespeist, um ein Lösen der klemmenden Führung zu erreichen. Sollte dies keine Verbesserung der Fehlfunktion bewirken, wird die Bremsanforderung auf diese Bremse /Achse reduziert, und eine Warnlampe oder ein akustisches Warnsignal kann beschaltet werden. Alternativ kann die Bremse bei stehendem Fahrzeug zumindest einmal oder mehrmals mit bis zu maximalem Bremsdruck angesteuert werden. Beispielsweise wird die Bremse bei abgeschaltetem Motor dreimal mit maximalem Bremsdruck für jeweils eine Sekunde betätigt, um dem Fehlerfall entgegenzuwirken beziehungsweise um den Fehlerfall zu beseitigen.

Die beschriebenen Ausführungsbeispiele sind nur beispielhaft gewählt und können miteinander kombiniert werden.

### Bezugszeichenliste

- 100: Fahrzeug
- 102: Nutzfahrzeug
- 104: Anhänger

- 110,120,130: Achse

- 112, 114: Bremse
- 122, 124: Bremse
- 132, 134: Bremse

- t112, t114: Temperatursignal
- t122, t124: Temperatursignal
- t132, t134: Temperatursignal

- 140: Steuergerät

- 142: Bremsanforderungssignal

- 144: Schnittstelle

- 146: Bestimmungsseinrichtung

- 148: Bereitstellungseinrichtung

- 150, 160: Achse

- 152, 154: Bremse
- 162, 164: Bremse

- t152, t154: Temperatursignal
- t162, t164: Temperatursignal

- 170: Anhängersteuergerät

- 172: Bremsanforderungssignal

## Patentansprüche

1. Verfahren zum Erhöhen der Betriebssicherheit zumindest eines thermisch belasteten Funktionsteils zumindest einer Bremse eines Fahrzeugs, insbesondere ein Nutzfahrzeug und/oder ein Anhänger und/oder zum Verringern eines Bremsverschleißes und/oder einer Antriebsenergie, wobei das Verfahren die folgenden Schritte aufweist:
Einlesen eines Temperatursignals der zumindest einen Bremse, welches zumindest eine durch zumindest einen Sensor erfasste Temperatur der Bremse und/oder eines Funktionsteils der Bremse repräsentiert, und Einlesen eines Bremsanforderungssignals und/oder Bremsdrucksignals für die zumindest eine Bremse;
Bestimmen eines thermischen Fehlerfalls unter Verwendung des Temperatursignals und des Bremsanforderungssignals und/oder Bremsdrucksignals; und
Bereitstellen eines angepassten Bremsanforderungssignals und/oder angepassten Bremsdrucksignals unter Verwendung des bestimmten thermischen Fehlerfalls, um die Betriebssicherheit des zumindest einen thermisch belasteten Funktionsteils der zumindest einen Bremse zu erhöhen und/oder das Verringern des Bremsverschleißes und/oder der Antriebsenergie zu erzielen,
**dadurch gekennzeichnet, dass**
die Temperaturmessung unter Verwendung eines Polradsensors und/oder eines ABS-Sensors erfolgt, wobei die Amplitude des Signals des Polradsensors eine Temperaturinformation liefert.

2. Verfahren nach Anspruch 1, **dadurch gekennzeichnet, dass** bei Ermittlung einer geringfügigen, in einem Toleranzbereich konstanten Erhöhung der Temperatur an Bremsbelägen der Bremse, insbesondere bei drehendem Rad, einmalig bei einer nachfolgenden betriebsbedingten Bremsung diese mit einem höheren Bremsdruck erfolgt, insbesondere bei gleichbleibender Bremsleistung des Fahrzeugs.

3. Verfahren nach Anspruch 2, **dadurch gekennzeichnet, dass** bei Erkennung der konstant höheren Temperatur nach einer Bremsung mit höherem Bremsdruck ein akustisches und/oder optisches Signal ausgegeben wird.

4. Verfahren nach einem der vorhergehenden Ansprüche, **dadurch gekennzeichnet, dass** bei Erkennung einer dauerhaft erhöhten Temperatur, ein Warnsignal bereitgestellt wird.

5. Verfahren nach einem der vorhergehenden Ansprüche, **dadurch gekennzeichnet, dass** der Bremsdruck in einem fahrstabilen Zustand des Fahrzeugs angepasst wird, insbesondere bei einem niedrigen Bremsdruck und/oder niedrigen Verzögerungswerten, insbesondere bei einem Bremsdruck kleiner 7 bar, insbesondere kleiner 5 bar, insbesondere kleiner 3 bar, insbesondere bei einem Verzögerungswert kleiner 3m/s.

6. Verfahren nach einem der vorhergehenden Ansprüche, **dadurch gekennzeichnet, dass** eine Abnahme der Reibarbeit der Scheibenbremse anhand verringerter Temperatur-Emissionen und/oder eines verringerten Emissionswertes und/oder bei einer Temperatur unter einem Temperatur-Schwellwert bei einem Bremsdruck unter einem Bremsdruckschwellwert ermittelt wird.

7. Verfahren nach Anspruch 6, **dadurch gekennzeichnet, dass** bei Ermittlung einer Anpassungsbremsung kleiner 0,3 g auf die Scheibenbremsen ein unterschiedlicher Bremsdruck aufgebracht wird.

8. Verfahren nach einem der vorhergehenden Ansprüche, **dadurch gekennzeichnet, dass** während einer Bremsung überprüft wird, innerhalb welcher Zeit und/oder eingebrachtem Bremsdruck welche Temperaturen erreicht werden, um einen Temperaturverlauf über die Zeit und/oder über einen Bremsdruckverlauf zu bestimmen und den thermischen Fehlerfall unter Verwendung des Temperaturverlaufs zu bestimmen.

9. Verfahren nach einem der vorhergehenden Ansprüche, **dadurch gekennzeichnet, dass** bei zu geringer Temperatur an der Scheibenbremse unterstützende Bremsen, wie Retarder oder rekuperative Bremsen, abgeschaltet werden.

10. Verfahren nach einem der vorhergehenden Ansprüche, **dadurch gekennzeichnet, dass** ermittelte Werte hinsichtlich Fehlerzuständen und Verschleiß über ein Fahrtenbuch- oder Geolokalisationssysteme an Werkstätten zur Bereitstellung von Ersatzteilen, oder Planung von Service-Intervallen übermittelt werden.

11. Verfahren nach einem der vorhergehenden Ansprüche, **dadurch gekennzeichnet, dass** das zumindest eine Temperatursignal durch eine Temperaturmessung direkt oder indirekt an einer Bremsscheibe der Scheibenbremse und/oder zumindest einem Bremsbelag und/oder an Gehäusebauteilen erfolgt.

12. Verfahren nach einem der vorhergehenden Ansprüche, **dadurch gekennzeichnet, dass** als Sensor zur Temperaturmessung, insbesondere an der Bremsscheibe, ein Strahlungspyrometer, vorzugsweise in Form eines Infrarot-Thermometers, wie eines Schmalband-Pyrometers, mit Germanium-Photodiode oder Indium-Gallium-Arsenid-Photodiode oder Bandstrahlungspyrometer oder Quotienten-Pyrometer eingesetzt wird.

13. Verfahren nach einem der vorhergehenden Ansprüche, **dadurch gekennzeichnet, dass** die Signalweitergabe drahtlos erfolgt.

14. Steuergerät (140, 170) zur Ausführung eines Verfahrens zum Erhöhen der Betriebssicherheit zumindest eines thermisch belasteten Funktionsteils zumindest einer Bremse eines Fahrzeug, insbesondere eines Nutzfahrzeugs und/oder eines Anhängers, nach einem der vorhergehenden Ansprüche und/oder zum Verringern eines Bremsverschleißes und/oder einer Antriebsenergie, wobei das Steuergerät die folgenden Einrichtungen aufweist:
eine Schnittstelle (144) zum Einlesen eines Temperatursignals der zumindest einen Bremse, welches zumindest eine durch zumindest einen Sensor erfasste Temperatur der Bremse und/oder eines Funktionsteils der Bremse repräsentiert, und Einlesen eines Bremsanforderungssignals und/oder Bremsdrucksignals für die zumindest eine Bremse;
eine Bestimmungseinrichtung (146) zum Bestimmen eines thermischen Fehlerfalls unter Verwendung des Temperatursignals und des Bremsanforderungssignals und/oder Bremsdrucksignals; und
eine Bereitstellungseinrichtung (148) zum Bereitstellen eines angepassten Bremsanforderungssignals und/oder angepassten Bremsdrucksignals unter Verwendung des thermischen Fehlerfalls, um die Betriebssicherheit des zumindest einen thermisch belasteten Funktionsteils der zumindest einen Bremse und/oder das Verringern des Bremsverschleißes und/oder der Antriebsenergie zu erzielen.

15. Bremse für ein Fahrzeug, insbesondere ein Nutzfahrzeug und/oder ein Anhänger, die dazu ausgebildet ist, ein Temperatursignal bereitzustellen und/oder eine angepasste Bremsanforderung zur Erhöhung der Betriebssicherheit zumindest eines thermisch belasteten Funktionsteils der Bremse und/oder zum Verringern eines Bremsverschleißes und/oder einer Antriebsenergie zu empfangen, **dadurch gekennzeichnet, dass** die Temperaturmessung einen Polradsensor und/oder einen ABS-Sensors aufweist, wobei die Amplitude des Signals des Polradsensors eine Temperaturinformation repräsentiert.

16. Bremssystem für ein Fahrzeug, insbesondere ein Nutzfahrzeug und/oder ein Anhänger, umfassend
ein Steuergerät gemäß Anspruch 14,
eine erste Bremse gemäß Anspruch 15 angeordnet auf einer Achse; und
eine zweite Bremse, die auf der Achse in Bezug zu einer Fahrzeuglängsachse auf einer der ersten Bremse gegenüberliegenden Seite der Achse oder auf einer weiteren Achse angeordnet ist.

17. Fahrzeug, insbesondere ein Nutzfahrzeug und/oder ein Anhänger, mit einem Bremssystem gemäß Anspruch 16.

18. Computer-Programmprodukt mit Programmcode zur Durchführung des Verfahrens zum Erhöhen der Betriebssicherheit zumindest eines thermisch belasteten Funktionsteils zumindest einer Bremse eines Fahrzeugs (100) nach einem der Ansprüche 1 bis 13, wenn das Computer-Programmprodukt auf einem Steuergerät gemäß Anspruch 14 ausgeführt wird.

## Claims

1. A method for improving the operational reliability of at least one thermally loaded functional part of at least one brake of a vehicle, in particular a utility vehicle and/or a trailer, and/or for reducing brake wear and/or drive energy, the method comprising the following steps:
inputting a temperature signal of the at least one brake, this temperature signal representing at least one temperature of the brake and/or of a functional part of the brake and this temperature being detected by at least one sensor, and inputting a braking request signal and/or brake pressure signal for the at least one brake;
detecting a thermal error situation using the temperature signal and the braking request signal and/or brake pressure signal; and
supplying an adapted braking request signal and/or an adapted brake pressure signal using the thermal error situation detected in order to improve the operational reliability of the at least one thermally loaded functional part of the at least one brake and/or achieve a reduction in brake wear and/or drive energy,
**characterised in that**
the temperature is measured using a pole wheel sensor and/or an ABS sensor, the amplitude of the signal of the pole wheel sensor supplying temperature data.

2. A method according to claim 1, **characterised in that** that when a minor increase, being constant within a tolerance range, in the temperature at the brake linings of the brake is detected, in particular when a wheel is rotating, a one-off higher brake pressure can be applied the next time the brakes are applied for operational reasons, in particular at constant vehicle braking power.

3. A method according to claim 2, **characterised in that** an acoustic and/or visual signal is given when the constant higher temperature is detected after braking at a higher brake pressure.

4. A method according to any one of the preceding claims, **characterised in that** a warning signal is given when a sustained higher temperature is detected.

5. A method according to any one of the preceding claims, **characterised in that** the brake pressure is adapted when the vehicle is in a stable driving state, in particular when the brake pressure is low and/or deceleration values are low, in particular when the brake pressure of less than 7 bar, in particular when it is less than 5 bar, in particular when it is less than 3 bar, in particular when the deceleration value is less than 3 m/s.

6. A method according to any one of the preceding claims, **characterised in that** a reduction in the frictional work of the disc brake is detected on the basis of reduced temperature emissions and/or a reduced emission value and/or at a temperature below a temperature threshold value when a brake pressure is below a brake pressure threshold value.

7. A method according to claim 6, **characterised in that** a different brake pressure is applied when a braking adaptation of less than 0.3 g on the disc brakes is detected.

8. A method according to any one of the preceding claims, **characterised in that** checks are carried out during braking to ascertain which temperatures are reached in what time frame and/or at which braking pressures in order to determine a temperature profile over time and/or over a brake pressure curve and to use the temperature profile to identify the thermal error situation.

9. A method according to any one of the preceding claims, **characterised in that** if the temperature at the disc brake is too low, auxiliary brakes such as retarders or recuperative brakes are switched off.

10. A method according to any one of the preceding claims, **characterised in that** detected values for error states and wear are transmitted via logbook or geo-localisation systems to workshops for the supply of spare parts or the planning of servicing intervals.

11. A method according to any one of the preceding claims, **characterised in that** the at least one temperature signal is generated directly or indirectly by means of a temperature measurement at a brake disc of the disc brake and/or at least one brake lining and/or at housing components.

12. A method according to any one of the preceding claims, **characterised in that** a radiation pyrometer, preferably in the form of an infrared thermometer such as a narrow-band pyrometer with a germanium photodiode or indium-gallium-arsenide photodiode or a broadband radiation pyrometer or a quotient pyrometer is used as the sensor for measuring the temperature, in particular on the brake disc.

13. A method according to any one of the preceding claims, **characterised in that** the signals are transmitted wirelessly

14. A controller (140, 170) for performing a method for improving the operational reliability of at least one thermally loaded functional part of at least one brake of a vehicle, in particular a utility vehicle and/or of a trailer, according to any one of the preceding claims, and/or for reducing brake wear and/or drive energy, the controller comprising the following devices:
an interface (144) for inputting a temperature signal of the at least one brake, this temperature signal representing at least one temperature of the brake and/or of a functional part of the brake and this temperature being detected by at least one sensor, and inputting a braking request signal and/or brake pressure signal for the at least one brake;
a detection device (146) for detecting a thermal error situation using the temperature signal and the braking request signal and/or brake pressure signal; and
a supply device (148) for supplying an adapted braking request signal and/or an adapted brake pressure signal using the thermal error situation in order to achieve operational reliability of the at least one thermally loaded functional part of the at least one brake and/or reduce brake wear and/or drive energy.

15. A brake for a vehicle, in particular a utility vehicle and/or a trailer, the brake being designed to supply a temperature signal and/or to receive an adapted braking request for improving the operational reliability of at least one thermally loaded functional part of the brake and/or for reducing brake wear and/or drive energy, **characterised in that** the temperature measurement device has a pole wheel sensor and/or an ABS sensor, the amplitude of the signal of the pole wheel sensor representing temperature data.

16. A brake system for a vehicle, in particular a utility vehicle and/or a trailer, comprising
a controller according to claim 14,
a first brake according to claim 15 arranged on an axle; and a second brake that is arranged on a side of the axle that is opposite the first brake in relation to the longitudinal axis of the vehicle or on another axle.

17. A vehicle, in particular a utility vehicle and/or a trailer, having a brake system according to claim 16.

18. A computer program product having program code for performing the method for improving the operational reliability of at least one thermally loaded functional part of at least one brake of a vehicle (100) according to any one of claims 1 to 13 when the computer program product is run on a controller according to claim 14.

## Revendications

1. Procédé d'amélioration de la sécurité de fonctionnement d'au moins une partie fonctionnelle sollicitée thermiquement d'au moins un frein d'un véhicule, notamment d'un véhicule utilitaire et/ou d'une remorque, et/ou de diminution de l'usure des freins et/ou d'une énergie d'entraînement, dans lequel le procédé a les stades suivants :
lecture d'un signal de température du au moins un frein, qui représente au moins une température, relevée par au moins un capteur, du frein et/ou d'une partie fonctionnelle du frein, et
lecture d'un signal de demande de freinage et/ou d'un signal de pression de frein pour le au moins un frein ;
détermination d'un cas de défaillance thermique en utilisant le signal de température et le signal de demande de freinage et/ou le signal de pression de frein, et
mise à disposition d'un signal adapté de demande de freinage et/ou d'un signal adapté de pression de frein, en utilisant le cas de défaillance thermique déterminé, afin d'améliorer la sécurité de fonctionnement de la au moins une partie fonctionnelle sollicitée thermiquement du au moins un frein et/ou d'obtenir la diminution de l'usure des freins et/ou de l'énergie d'entraînement,
caractérisé en ce
la mesure de la température s'effectue en utilisant un capteur de roue polaire et/ou un capteur ABS, l'amplitude du signal du capteur de roue polaire donnant une information de température.

2. Procédé suivant la revendication 1, **caractérisé en ce que**, lors de la détermination d'une légère élévation constante dans une plage de tolérance de la température des garnitures des freins, notamment lorsque la roue tourne, une fois lors d'un freinage suivant dû au fonctionnement, ce freinage s'effectue avec une pression de frein plus grande en ayant notamment une puissance de freinage constante du véhicule.

3. Procédé suivant la revendication 2, **caractérisé en ce que**, lorsque l'on détecte la température plus élevée de manière constante après un freinage avec une pression de frein plus grande, on émet un signal acoustique et/ou optique.

4. Procédé suivant l'une des revendications précédentes, **caractérisé en ce que**, lorsqu'on détecte une température plus élevée en permanence, on met à disposition un signal d'avertissement.

5. Procédé suivant l'un des revendications précédentes, **caractérisé en ce que** l'on adopte la pression de frein dans un état de roulement stable du véhicule, notamment pour une pression de frein plus basse et/ou pour des valeurs de décélération plus basses, notamment pour une pression de frein plus petite que 7 bar, notamment plus petite que 5 bar, notamment plus petite que 3 bar, notamment pour une valeur de décélération plus petite que 3 m/s.

6. Procédé suivant l'une des revendications précédentes, **caractérisé en ce que** l'on détermine une diminution du travail de frottement du frein à disque, à l'aide de moindres émissions de température et/ou d'une moindre valeur d'émission et/ou pour une température inférieure à une valeur de seuil de température pour une pression de frein en-dessous d'une valeur de seuil de pression de frein.

7. Procédé suivant la revendication 6, **caractérisé en ce que**, lors de la détermination d'un freinage d'adaptation plus petit que 0,3 g, on applique au frein à disque une pression de frein différente.

8. Procédé suivant l'une des revendications précédentes, **caractérisé en ce que** l'on contrôle pendant un freinage dans quel temps et/ou pression de frein appliqué(e), quelles températures sont atteintes pour déterminer une courbe de température en fonction du temps et/ou en fonction d'une courbe de pression de frein et pour déterminer le cas de défaillance thermique en utilisant la courbe de température.

9. Procédé suivant l'une des revendications précédentes, **caractérisé en ce que**, pour des freins soumis à une température trop basse sur le frein à disque, comme des ralentisseurs ou des freins à récupération, on les desserre.

10. Procédé suivant l'une des revendications précédentes, **caractérisé en ce que** l'on transmet des valeurs déterminées en ce qui concerne des états de défaillance et de l'usure par un système de livre de bord ou de géolocalisation à des ateliers de mise à disposition de pièces de rechange ou de planification d'intervalles d'entretien.

11. Procédé suivant l'une des revendications précédentes, **caractérisé en ce que** le au moins un signal de température est produit par une mesure de température directement ou indirectement sur un disque du frein à disque et/ou sur au moins une garniture de frein et/ou des parties constitutives de carter.

12. Procédé suivant l'une des revendications précédentes, **caractérisé en ce que** l'on utilise comme capteur pour la mesure de la température, notamment sur le disque de frein, un pyromètre à rayonnement, de préférence sous la forme d'un thermomètre à infrarouge, comme un pyromètre à bande étroite, ayant des photodiodes en germanium ou des photodiodes à l'arséniure d'indium et de gallium ou un pyromètre à bande étroite ou un pyromètre à quotient.

13. Procédé suivant l'une des revendications précédentes, **caractérisé en ce que** l'acheminement du signal s'effectue sans fil.

14. Appareil (140, 170) de commande pour l'exécution d'un procédé d'amélioration de la sécurité de fonctionnement d'au moins une partie fonctionnelle sollicitée thermiquement d'au moins un frein d'un véhicule, notamment d'un véhicule utilitaire et/ou d'une remorque, suivant l'une des revendications précédentes et/ou pour diminuer l'usure des freins et/ou une énergie d'entraînement, l'appareil de commande ayant les dispositifs suivants :
une interface (144) de lecture d'un signal de température du au moins un frein, qui représente au moins une température, détectée par au moins un capteur, du frein ou d'une partie fonctionnelle du frein, et de lecture d'un signal de demande de freinage et/ou d'un signal de pression de frein pour le au moins un frein ;
un dispositif (146) de détermination pour déterminer un cas de défaillance thermique, en utilisant le signal de température et le signal de demande de freinage et/ou le signal de pression de frein ; et
un dispositif (148) de mise à disposition pour la mise à disposition d'un signal adapté de demande de frein et/ou d'un signal adapté de pression de frein, en utilisant le cas de défaillance thermique afin d'obtenir la sécurité de fonctionnement de la au moins une partie fonctionnelle sollicitée thermiquement du au moins un frein et/ou la diminution de l'usure des freins et/ou de l'énergie d'entraînement.

15. Frein d'un véhicule, notamment d'un véhicule utilitaire et/ou d'une remorque, qui est constitué pour disposer d'un signal de température et/ou pour recevoir une demande adaptée de freinage pour améliorer la sécurité de fonctionnement d'au moins une partie fonctionnelle, sollicitée thermiquement, du frein et/ou pour diminuer l'usure des freins et/ou l'énergie d'entraînement, **caractérisé en ce que** la mesure de la température a un capteur à roue polaire et/ou un capteur ABS, l'amplitude du signal du capteur à roue polaire représentant une information de température.

16. Système de frein d'un véhicule, notamment d'un véhicule utilitaire et/ou d'une remorque comprenant
un appareil de commande suivant la revendication 14,
un premier frein suivant la revendication 15 monté sur un essieu ;
un deuxième frein qui est monté sur l'essieu par rapport à un axe longitudinal du véhicule d'un côté, opposé au premier frein, de l'essieu ou sur un autre essieu.

17. Véhicule, notamment véhicule utilitaire et/ou remorque ayant un système de frein suivant la revendication 16.

18. Produit de programme d'ordinateur ayant des codes de programme pour effectuer le procédé d'amélioration de la sécurité de fonctionnement d'au moins une partie fonctionnelle sollicitée thermiquement, d'au moins un frein d'un véhicule (100) suivant l'une des revendications 1 à 13, lorsque le produit de programme d'ordinateur est réalisé sur un appareil de commande suivant la revendication 14.
